# EUROPÄISCHE PATENTSCHRIFT

(11) **EP 3 753 823 B1**
(45) Veröffentlichungstag und Bekanntmachung des Hinweises auf die Patenterteilung: **14.10.2026**
(21) Anmeldenummer: 20184779.5
(22) Anmeldetag: 18.08.2017
(51) Int. Cl.: B62D 59/04, B62D 25/20

(54) **HILFSANTRIEB FÜR EINEN ANHÄNGER UND ANHÄNGER**
AUXILIARY DRIVE FOR A TRAILER AND TRAILER
ENTRAINEMENT D'ASSISTANCE POUR UNE REMORQUE ET REMORQUE

(30) Priorität: 26.08.2016 DE 202016104710 U
(43) Veröffentlichungstag der Anmeldung: 23.12.2020
(62) Dokumentnummer(n) der früheren Anmeldung(en) nach Art. 76 EPÜ: 17186806.0 / 3 287 347
(73) Patentinhaber: Reich GmbH Regel- und Sicherheitstechnik, 35713 Eschenburg-Wissenbach (DE)
(72) Erfinder: BENDER, Steffen, 35713 Eschenburg (DE)
(74) Vertreter: Hofstetter, Schurack & Partner

(56) Entgegenhaltungen:
- EP-A1- 1 764 274
- EP-A1- 2 138 386
- EP-A1- 2 206 641
- DE-A1- 102013 107 914
- DE-A1- 3 736 788
- DE-U1- 20 306 487

## Beschreibung

Die vorliegende Erfindung betrifft einen Anhänger mit einem Hilfsantrieb, insbesondere einen Wohnwagen, einen Bootsanhänger, einen Verkaufswagen, einen Transportanhänger oder einen Autotransportanhänger, wobei der Hilfsantrieb mindestens ein Antriebselement, welches mit einer Lauffläche eines Anhängerrades in Eingriff bringbar ist und mindestens eine Befestigungs- und Abstützvorrichtung zur Befestigung und Abstützung des Hilfsantriebs an dem Anhänger umfasst.

Hilfsantriebe für Anhänger, insbesondere für Wohnwagen, Bootsanhänger, Verkaufswagen, Transportanhänger und ähnliche Anhänger sind in einer großen Vielzahl bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich.

Aufgrund geänderter Rahmenbedingungen, wie zum Beispiel neue Führerscheinregelungen, die Tendenz zu weniger stark motorisierten kraftstoffsparenden Zugfahrzeugen und Kraftstoffeinsparung im Zugbetrieb, bekommt auch für Anhänger der oben beschrieben Art der Leichtbau eine zunehmende Bedeutung. Diese Maßnahmen erschweren aber zugleich den üblichen Anbau von Hilfsantrieben beziehungsweise Rangierhilfen am Chassis des Anhängers, beispielsweise aufgrund geringerer Materialstärken. Dadurch ist das Chassis nicht mehr in der Lage, die beim Rangieren mit dem Hilfsantrieb auftretenden und die zum Beispiel den Längsträger eingetragenen Kräfte aufzunehmen. Letztendlich führt dies zum Versagen (Verbiegen, Brechen) des Längsträgers. Dies gilt im Besonderen bei einer Anordnung des Hilfsantriebs in Fahrtrichtung vor der Achse. Die Befestigungs- und Abstützvorrichtung für den Hilfsantrieb müsste folglich stärker/schwerer ausgeführt werden, um die auftretenden Kräfte aufnehmen zu können. Gleiches gilt für den Längsträger. Damit ergäbe sich aber eine erheblich geringere bzw. überhaupt keine Gewichtseinsparung des Gesamtsystems.

Die Gebrauchsmusterschrift DE 203 06 487 U1 beschreibt einen Hilfsantrieb eines Fahrzeugs. An dem Fahrzeug ist ein Elektromotor befestigt, der eine Welle antreibt. Deren Außenoberfläche ist als Reibfläche ausgebildet und kann gegen die Reifenlauffläche mindestens eines Reifens des Fahrzeugs gepresst werden. Die EP 2 206 641 A1 beschreibt einen Anhänger mit einem Hilfsantrieb. Dieser Hilfsantrieb umfasst auf die Räder wirkende Teile wie Antriebsrollen. Die Bewegung der gegenüberliegenden Antriebsrollen zu den Rädern erfolgt gemeinsam dadurch, dass die Antriebsrollen auf einer gemeinsamen Querstange gelagert sind, die mittels eines gemeinsamen Motors von und zu den beiden Rädern hin und her bewegt werden kann. DE 10 2013 107914 A1 offenbart eine Trageinrichtung für einen Rangierantrieb an einem Anhänger, die am Mittelsteg der Längsträger des Fahrgestells befestigt ist.

Es ist daher Aufgabe der vorliegenden Erfindung, einen gattungsgemäßen Hilfsantrieb und einen gattungsgemäßen Anhänger mit mindestens einem Hilfsantrieb bereitzustellen, durch die einerseits eine sichere Befestigung des Hilfsantriebs an dem Anhänger und gleichzeitig eine verbesserte Krafteinleitung der beim Rangieren mit dem Hilfsantrieb auftretenden Kräfte gewährleistet ist.

Zur Lösung dieser Aufgaben dienen ein Anhänger mit einem Hilfsantrieb mit den Merkmalen des Anspruchs 1. Vorteilhafte Ausgestaltungen mit zweckmäßigen Weiterbildungen der Erfindung sind in den Unteransprüchen angegeben, wobei vorteilhafte Ausgestaltungen des Hilfsantriebs als vorteilhafte Ausgestaltungen des erfindungsgemäßen Anhängers und umgekehrt anzusehen sind.

Die vorliegende Erfindung betrifft einen Anhänger, insbesondere Wohnwagen, Bootsanhänger, Verkaufswagen, Transportanhänger oder Autotransportanhänger, umfassend mindestens einen Hilfsantrieb für den Anhänger und einen Wohn- oder Arbeitsaufbaus des Anhängers, wobei der Hilfsantrieb mindestens ein Antriebselement, welches mit einer Lauffläche des Anhängerrades in Eingriff bringbar ist und mindestens eine Befestigungs- und Abstützvorrichtung zur Befestigung und Abstützung des Hilfsantriebs an dem Anhänger umfasst. Dabei ist die Befestigungsund Abstützvorrichtung an einer Seiten- und/oder Bodenwand und/oder einem Übergangsbereich zwischen der Seiten- und Bodenwand und/oder an mindestens einem an der Seiten- und/oder Bodenwand und/oder dem Übergangsbereich angeordneten Zwischenelement eines Wohn- oder Arbeitsaufbaus des Anhängers angeordnet. Eine derartige erfindungsgemäße Anordnung der Befestigungs- und Abstützvorrichtung ermöglicht einerseits eine sichere Befestigung des Hilfsantriebs an dem Anhänger und gleichzeitig eine verbesserte Krafteinleitung der beim Rangieren mit dem Hilfsantrieb auftretenden Kräfte, nämlich in die genannten Elemente des Wohn- oder Arbeitsaufbaus des Anhängers. Dies gilt sowohl für Anhänger mit selbsttragend ausgebildeten Wohn- und Arbeitsaufbauten, wie auch für Anhänger, bei denen der Wohn- oder Arbeitsaufbau auf einem Stützrahmen beziehungsweise einem Chassis des Anhängers angeordnet ist. Des Weiteren kann durch die erfindungsgemäße Anordnung der Befestigungs- und Abstützvorrichtung gewährleistet werden, dass die Bodenfreiheit zwischen dem Anhänger und dem Boden durch den Hilfsantrieb nicht oder nur unwesentlich verringert wird.

Zudem weist die Befestigungs- und Abstützvorrichtung mindestens eine Schraubund/oder Klemm- und/oder Steckverbindung zur Befestigung eines Tragarms des Hilfsantriebs an der Seiten- und/oder Bodenwand und/oder dem genannten Übergangsbereich und/oder dem genannten Zwischenelement auf. Dabei kann ein dem Hilfsantrieb zugewandtes Ende des Tragarms über mindestens ein Befestigungselement mit dem Hilfsantrieb, insbesondere einem Gehäuse des Hilfsantriebs, verbunden sein. Da die Dimensionierung und insbesondere die Länge des Tragarms ohne weiteres vorbestimmbar und definierbar sind, ist eine Positionierung von Hilfsantrieben unterschiedlicher Dimensionen an Anhängern mit ebenfalls unterschiedlichen Dimensionen ohne weiteres möglich.

Des Weiteren besteht erfindungsgemäß die Möglichkeit, dass an dem Tragarm mindestens eine Anschlussplatte angeordnet ist. Diese Anschlussplatte kann mit dem Tragarm verschweißt, verschraubt, verklebt und/oder über eine Klemm- oder Steckverbindung verbunden oder mit diesen einstückig ausgebildet sein. Durch die Anschlussplatte wird vorteilhafterweise die Verbindungsfläche zwischen dem Tragarm und den entsprechenden Bereichen des Wohn- oder Arbeitsaufbaus des Anhängers vergrößert. Es besteht zudem erfindungsgemäß die Möglichkeit, dass die Anschlussplatte mindestens eine Öffnung zur Aufnahme einer Schraubverbindung zur Befestigung der Anschlussplatte mit der Seiten- und/oder Bodenwand und/oder dem genannten Übergangsbereich und/oder dem genannten Zwischenelement aufweist. Die Anschlussplatte kann aber gemäß der Erfindung auch mittels mindestens einer Klemmverbindung mit der Seiten- und/oder Bodenwand und/oder dem genannten Übergangsbereich und/oder dem genannten Zwischenelement verbunden sein. Zudem ist es erfindungsgemäß möglich, dass die Anschlussplatte mittels mindestens einer Steckverbindung mit der Seiten- und/oder Bodenwand und/oder dem genannten Übergangsbereich und/oder dem genannten Zwischenelement verbunden ist. Ein Verschweißen oder ein Verkleben der Anschlussplatte mit den entsprechenden Bereichen des Wohn- oder Arbeitsaufbaus des Anhängers ist auch denkbar.

In weiteren vorteilhaften Ausgestaltungen des erfindungsgemäßen Anhängers ist der Tragarm mittels mindestens einem Halteelement gehalten, wobei das Halteelement an der Seiten- und/oder Bodenwand und/oder dem genannten Übergangsbereich und/oder dem genannten Zwischenelement des Wohn- oder Arbeitsaufbaus befestigbar ist. Zudem kann das Halteelement mit den genannten Bereichen einstückig ausgebildet sein. Damit ist eine Fixierung des Tragarms ohne die Zwischenschaltung im Vorhergehenden genannten Anschlussplatte möglich. Das Halteelement kann dabei erfindungsgemäß eine Aufnahmeöffnung oder eine Aufnahmesitz zur Aufnahme und/oder Durchführung des Tragarms aufweisen. Zudem kann gemäß der Erfindung eine Querschnittsform der Aufnahmeöffnung oder des Aufnahmesitzes derart gewählt sein, dass sie zumindest teilweise einer Querschnittsform des Tragarms entspricht. Dadurch ergibt sich ein sicherer Halt des Tragarms in dem Halteelement. Zudem kann das Halteelement erfindungsgemäß mindestens ein Fixierelement zur Lagefixierung des Tragarms in dem Haltelement umfassen. Dadurch ist der Tragarm gegen ein Verrutschen innerhalb des Halteelementes gesichert.

Des Weiteren kann das Halteelement erfindungsgemäß mindestens einen Befestigungsflansch zur Befestigung des Halteelementes an der Seiten- und/oder Bodenwand und/oder dem genannten Übergangsbereich und/oder dem genannten Zwischenelement des Wohn- und Arbeitsaufbaus aufweisen. Der Befestigungsflansch ist dabei mit den genannten Bereichen des Wohn- oder Arbeitsaufbaus des Anhängers verschraubbar, verklebbar, klemmbar, steckbar oder verschweißbar ausgebildet. Vorteilhafterweise wird mittels des Befestigungsflansches die verfügbare Fläche zur Befestigung des Halteelementes an den genannten Bereichen des Wohnund Arbeitsaufbaus des Anhängers vergrößert.

**In** weiteren vorteilhaften Ausgestaltungen des erfindungsgemäßen Anhängers umfasst die Befestigungs- und Abstützvorrichtung mindestens einen separat ausgebildeten, an der Seiten- und/oder Bodenwand und/oder dem Übergangsbereich und/oder dem Zwischenelement des Wohn- und Arbeitsaufbaus anbringbaren oder einstückig mit der Seiten- und/oder Bodenwand und/oder dem Übergangsbereich und/oder dem Zwischenelement ausgebildeten Befestigungsbolzen zur Befestigung des Befestigungsflansches des Halteelementes. Dabei kann der Befestigungsflansch mit dem Befestigungsbolzen verschraubbar, verklebbar, klemmbar, steckbar oder verschweißbar ausgebildet sein. Dadurch ist eine sichere Verbindung zwischen dem Halteelement und dem entsprechenden Bereich des Wohn- und Arbeitsaufbaus des Anhängers gewährleistet.

In weiteren vorteilhaften Ausgestaltungen des erfindungsgemäßen Anhängers umfasst die Befestigungs- und Abstützvorrichtung mindestens ein Gegenlager zur Aufnahme eines durch eine entsprechende Öffnung des Befestigungsflansches geführten Verbindungselementes, wobei das Gegenlager in der Seiten- und/oder Bodenwand und/oder dem Übergangsbereich und/oder dem Zwischenelement des Wohn- oder Arbeitsaufbaus angeordnet ist. Dabei kann das Verbindungselement derart ausgebildet sein, dass es mit dem Gegenlager verschraubbar, verklemmbar oder steckbar ist. Zudem ist es möglich, dass das Gegenlager mit der Seiten- und/oder Bodenwand und/oder dem Übergangsbereich und/oder dem Zwischenelement des Wohn- oder Arbeitsaufbaus vergossen ist. Damit ist wiederum eine sichere Befestigung des Halteelements an den entsprechenden Bereichen des Wohn- oder Arbeitsaufbaus des Anhängers gewährleistet.

In weiteren vorteilhaften Ausgestaltungen des Anhängers umfasst die Befestigungsund Abstützvorrichtung ein zweites Halteelement, wobei das zweite Halteelement an einer Innenseite der Seiten- und/oder Bodenwand und/oder einer Innenseite des Übergangsbereichs und/oder einer Innenseite des Zwischenelementes des Wohnoder Arbeitsaufbaus angeordnet ist, derart, dass es mit dem außenliegenden Halteelement verbindbar ist. Die Anordnung eines zweiten, innenliegenden Halteelementes stabilisiert die Befestigungs- und Abstützvorrichtung insgesamt. Insbesondere kommt es zu einer gleichmäßigen Einleitung und Verteilung von bei einem Rangieren des Anhängers mittels des Hilfsantriebs auftretender Kräfte. Das zweite Halteelement kann gemäß der Erfindung dabei als separates Element oder einstückig mit der Innenseite der Seiten- und/oder Bodenwand und/oder dem Übergangsbereich und/oder dem Zwischenelement ausgebildet sein. Zudem besteht die Möglichkeit, dass das zweite Halteelement mindestens eine Aufnahmeöffnung oder einen Aufnahmesitz zur Aufnahme und/oder Durchführung einer Verstärkungsstrebe aufweist. Die Anordnung einer Verstärkungsstrebe stabilisiert die Befestigungs- und Abstützvorrichtung. Eine sichere Befestigung des Hilfsantriebs sowie eine verbesserte Krafteinleitung der beim Rangieren mit dem Hilfsantrieb auftretenden Kräfte sind gewährleistet. Dabei kann eine Querschnittsform der Aufnahmeöffnung oder des Aufnahmesitzes des zweiten Halteelements derart gewählt sein, dass sie zumindest teilweise in der Querschnittsform der Verstärkungsstrebe entspricht. Dadurch ist ein sicherer Sitz der Verstärkungsstrebe innerhalb des zweiten Halteelementes gewährleistet. Zudem kann das zweite Halteelement mindestens ein Fixierelement zur Lagefixierung der Verstärkungsstrebe an dem zweiten Halteelement umfassen. Das zweite Halteelement kann erfindungsgemäß wiederum mindestens einen Befestigungsflansch zur Befestigung des zweiten Halteelementes an dem außenliegenden Halteelement aufweisen. Dabei kann der Befestigungsflansch des zweiten Halteelementes mit dem Befestigungsflansch des außenliegenden Halteelementes verschraubbar, klemmbar oder steckbar ausgebildet sein. Insgesamt ergibt sich wiederum eine sichere Befestigung des Tragarms des Hilfsantriebs an dem Anhänger.

In weiteren vorteilhaften Ausgestaltungen des erfindungsgemäßen Anhängers ist der Tragarm als Querstrebe des Anhängers ausgebildet oder mit einer Querstrebe lösbar verbindbar. Die Querstrebe trägt vorteilhafterweise zur Stabilität des Anhängers bei, wobei an den beiden gegenüberliegenden Enden der als Tragarm ausgebildeten Querstrebe jeweils mindestens ein Hilfsantrieb angeordnet ist. Es besteht aber auch die Möglichkeit, dass entsprechende Tragarme mit einer separaten Querstrebe lösbar verbindbar sind. Durch die lösbare Verbindung dieser mehrteiligen Konstruktion ist der Tragarm insgesamt teleskopierbar und damit an unterschiedlichen Breiten der Anhänger ohne weiteres anpassbar.

In weiteren vorteilhaften Ausgestaltungen des erfindungsgemäßen Anhängers ist das Zwischenelement als separates Element, an der Seiten- und/oder Bodenwand und/oder dem Übergangsbereich des Wohn- oder Arbeitsaufbaus anbringbares Element oder einstückig mit der Seiten- und/oder Bodenwand und/oder dem Übergangsbereich zwischen der Seiten- und der Bodenwand des Wohn- und Arbeitsaufbaus des Anhängers ausgebildet. Das Zwischenelement dient dabei insbesondere als eine Art Stabilisator für die Anordnung der Befestigungs- und Abstützvorrichtung. Die Ausbildung eines derartigen Zwischenelementes ist insbesondere bei Anhängern vorteilhaft, die in sogenannter Leichtbauweise hergestellt sind. Diese weisen üblicherweise sowohl im Bereich des Wohn- und Arbeitsaufbaus wie auch bei anderen Stützstrukturen, wie zum Beispiel dem Chassis des Anhängers, geringere Materialstärken auf. Über das Zwischenelement kann auch bei verringerten Materialstärken eine sichere Befestigung des Hilfsantriebs an dem Anhänger gewährleistet werden. Dabei besteht erfindungsgemäß die Möglichkeit, dass das Zwischenelement als plateauartiger oder kastenartiger Vorsprung ausgebildet ist. Das Zwischenelement weist in diesen Ausgestaltungsbeispielen eine flächenartige Oberfläche auf, die zur Anordnung der Befestigungs- und Abstützvorrichtung dient. Das Zwischenelement kann aber auch als eine Achsverkleidung ausgebildet sein und gegebenenfalls mindestens ein Verstärkungselement aufweisen. Das Verstärkungselement kann zum Beispiel aus einem Metallblech, Metallstreifen oder verstärkten Kunststoffelementen bestehen. Des Weiteren besteht erfindungsgemäß die Möglichkeit, dass das Zwischenelement derart ausgebildet ist, dass es sich an der Bodenwand zwischen den Seitenwänden ungefähr parallel zu einer Radachse des Anhängers erstreckt. Dabei kann es sich über die gesamte oder nahezu die gesamte Erstreckung der Bodenwand quer zu den Seitenwänden erstrecken. Eine derartige Ausgestaltung trägt weiter zu einer erhöhten Stabilität des Wohn- und Arbeitsaufbaus sowie des gesamten Anhängers bei.

In weiteren vorteilhaften Ausgestaltungen des erfindungsgemäßen Anhängers ist der Wohn- oder Arbeitsaufbau des Anhängers selbsttragend ausgebildet. Insbesondere bei Wohn- und Arbeitsaufbauten wie auch bei Anhängern, die insgesamt in sogenannter Leichtbauweise hergestellt sind, ergeben sich Vorteile, wie zum Beispiel eine Kraftstoffeinsparung im Zugbetrieb. Es ist daher auch möglich, dass der Wohnoder Arbeitsaufbau des Anhängers auf einem Stützrahmen des Anhängers angeordnet ist.

In weiteren vorteilhaften Ausgestaltungen des erfindungsgemäßen Anhängers umfasst der Stützrahmen des Anhängers mindestens zwei parallel zueinander verlaufende Längsträger. Es ist aber auch möglich, dass der Stützrahmen zwei V-förmig zueinander angeordnete Längsträger umfasst. Vorteilhafterweise ist die Befestigungs- und Abstützvorrichtung derart ausgebildet, dass sie an einer Vielzahl von Längsträgertypen angeordnet und damit verwendet werden kann. Der Stützrahmen kann zum Beispiel zumindest teilweise aus einem Leichtmetall, einem faserverstärktem Kunststoff oder einer Kombination aus diesen Materialien bestehen.

Auch der Wohn- oder Arbeitsaufbau kann zumindest teilweise aus einem Leichtmetall, einem faserverstärkten Kunststoff oder einer Kombination aus diesen Materialien bestehen. Des Weiteren ist die Befestigungs- und Abstützvorrichtung derart angeordnet, dass ein Antriebselement des Hilfsantriebs in einem Bereich einer Lauffläche eines Anhängerrades des Anhängers positioniert ist. Dadurch ist ein sicherer Antrieb des Anhängers mittels des Hilfsantriebs gewährleistet.

Weitere Vorteile, Merkmale und Einzelheiten der Erfindung ergeben sich aus der nachfolgenden Beschreibung mehrerer Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder in Alleinstellung verwendbar, ohne den Rahmen der Erfindung zu verlassen.

Es zeigen
- Figur 1: eine schematische Darstellung eines erfindungsgemäßen Anhängers mit Hilfsantrieb;
- Figur 2: eine schematische Darstellung des erfindungsgemäßen Anhängers mit Hilfsantrieb gemäß Figur 1 aus einem anderen Blickwinkel;
- Figur 3: eine schematische, teilweise geschnittene Darstellung des erfindungsgemäßen Anhängers gemäß den Figuren 1 und 2;
- Figur 4: eine schematische Darstellung eines erfindungsgemäßen Anhängers mit Hilfsantrieb gemäß einer zweiten Ausführungsform;
- Figur 5: eine schematische Darstellung des erfindungsgemäßen Anhängers gemäß Figur 4 aus einem anderen Blickwinkel;
- Figur 6: eine schematische, teilweise geschnittene Darstellung des erfindungsgemäßen Anhängers mit Hilfsantrieb gemäß den Figuren 4 und 5;
- Figur 7: eine schematische, teilweise geschnittene Darstellung des erfindungsgemäßen Anhängers mit Hilfsantrieb gemäß einer dritten Ausführungsform;
- Figur 8: eine schematische, teilweise geschnittene Darstellung des erfindungsgemäßen Anhängers mit Hilfsantrieb gemäß einer vierten Ausführungsform; und
- Figur 9: eine schematische, teilweise geschnittene Darstellung des erfindungsgemäßen Anhängers mit Hilfsantrieb gemäß einer fünften Ausführungsform.

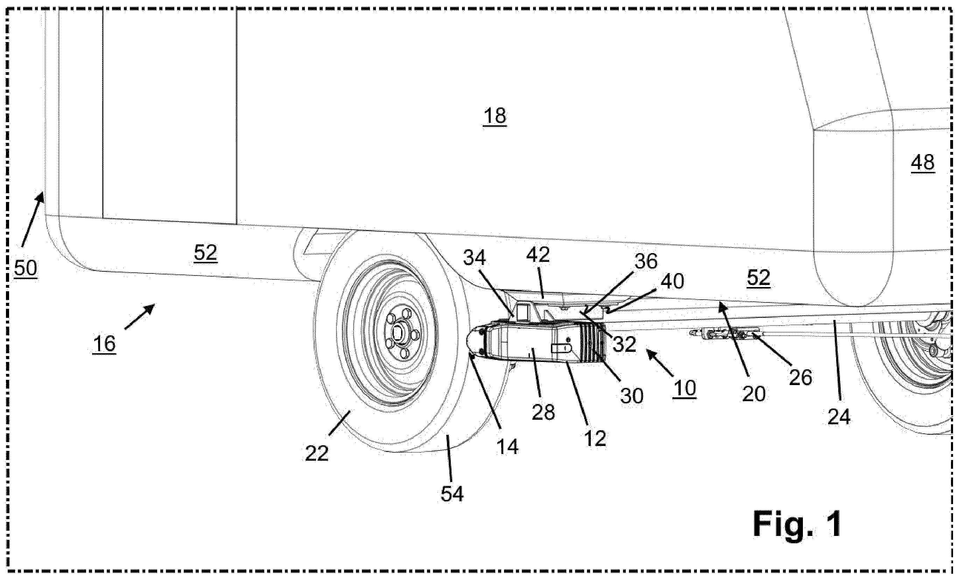

Die Figur 1 zeigt eine schematische Darstellung eines Hilfsantriebs 12. Bei dem Hilfsantrieb 12 handelt es sich um einen zusätzlichen Antrieb für einen Anhänger, insbesondere einen hier dargestellten Wohnwagen. Unter Anhänger werden auch beispielsweise Bootsanhänger, Verkaufswagen, Transportanhänger oder Autotransportanhänger oder ähnliche Anhänger verstanden. Der Hilfsantrieb 12 umfasst dabei an ein walzenartiges Antriebselement 14, welches zum Eingriff mit einer Lauffläche 54 eines Anhängerrades 22 ausgebildet ist. Das Antriebselement 14 ist dabei in einer Gehäusehalterung eines Gehäuses 28 des Hilfsantriebs 12 drehbar gelagert. In Fig. 1 ist der Hilfsantrieb 12 in einem nicht-zugeschwenkten Zustand dargestellt. Dies bedeutet, dass das Antriebselement 14 nicht in Eingriff mit dem Anhängerrad 22 beziehungsweise dessen Lauffläche 54 steht. Um eine Bewegung des Anhängerrads 22 zu ermöglichen, muss das Antriebselement 14 in Eingriff mit der Lauffläche 54 gebracht werden. Durch eine Drehung des Antriebselements 14 wird dann das Anhängerrad 22 bewegt. Der Hilfsantrieb 12 umfasst zudem elektronische und elektrische Komponenten, wie zum Beispiel den Motor für das Antriebselement 14 sowie Anschwenkmotoren und -führungen zur Betätigung einer Zustellvorrichtung 30 für das Antriebselement 14 sowie eine Steuerelektronik (nicht dargestellt). Die zuletzt genannten Komponenten sind innerhalb des Gehäuses 28 des Hilfsantriebs 12 angeordnet. Das An- und Abschwenken des Antriebselements 14 erfolgt durch ein entsprechendes Verschieben von zumindest Teilelementen des Hilfsantriebs 12 relativ zu einem Wohn- oder Arbeitsaufbau 16 des Anhängers. In dem dargestellten Ausführungsbeispiel ist der Wohn- oder Arbeitsaufbau 16 selbsttragend ausgebildet. Auf ein konventionelles Fahrzeuggestell beziehungsweise Chassis kann hierbei verzichtet werden. Selbstverständlich kann der Hilfsantrieb 12 aber auch bei Anhängern mit Fahrgestell verwendet werden.

Des Weiteren erkennt man, dass der Hilfsantrieb 12 über ein Befestigungselement 34 mit einem Tragarm 32 verbunden ist. Aus Fig. 1 wird zudem deutlich, dass der Hilfsantrieb 12 unterhalb des Wohn- oder Arbeitsaufbaus 16 und davon beabstandet angeordnet ist. Die Abstützung und Befestigung des Hilfsantriebs 12 erfolgt über eine Befestigungs- und Abstützvorrichtung 10. Man erkennt, dass die Befestigungs- und Abstützvorrichtung 10. Man erkennt, dass die Befestigungs- und Abstützvorrichtung 10 derart ausgebildet ist, dass sie an einer Bodenwand 20 des Wohnaufbaus 16 des Anhängers unter Zwischenschaltung eines an der Bodenwand 20 angeordneten Zwischenelementes 42 anordenbar ist. Die Befestigungs- und Abstützvorrichtung 10 weist dabei eine Schraubverbindung zur Befestigung des Tragarms 32 des Hilfsantriebs 12 an der Bodenwand 20 beziehungsweise dem an der Bodenwand angeordneten Zwischenelement 42 auf. Man erkennt, dass hierfür der Tragarm 32 eine Anschlussplatte 36 aufweist, die in dem dargestellten Ausführungsbeispiel mit dem Tragarm 32 verschweißt ist. Es besteht aber auch die Möglichkeit, dass die Anschlussplatte 36 mit dem Tragarm 32 verschraubt, verklebt und/oder über eine Klemm- oder Steckverbindung verbunden ist. Zudem besteht die Möglichkeit, dass die Anschlussplatte 36 mit dem Tragarm 32 einstückig ausgebildet ist.

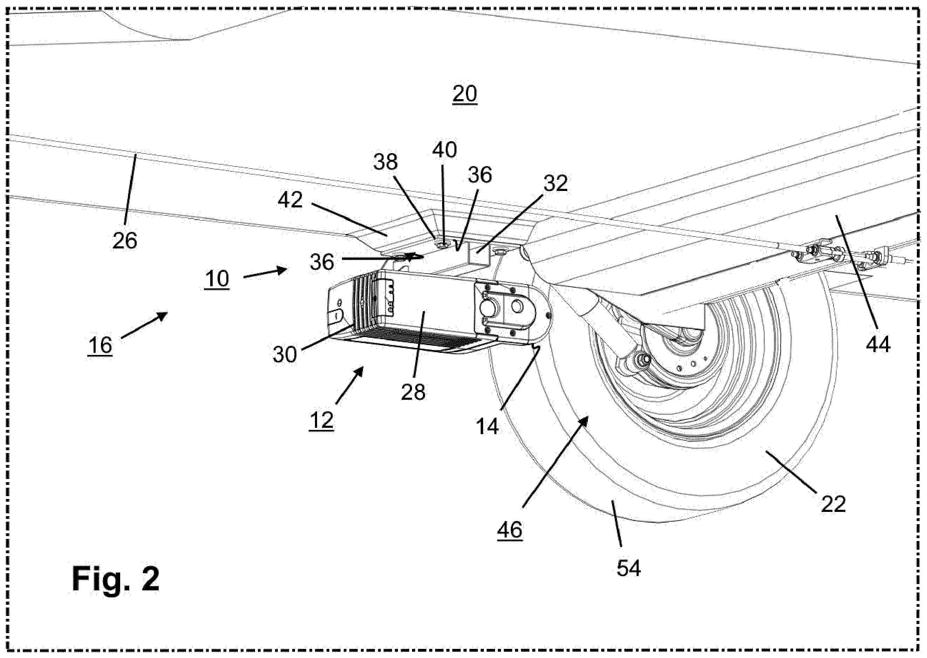

In Zusammenschau mit der Fig. 2, die eine schematische Darstellung des Hilfsantriebs 12 gemäß Fig. 1 aus einem anderen Blickwinkel zeigt, wird deutlich, dass die Anschlussplatte 36 mehrere Öffnungen 38 zur Aufnahme jeweils einer Schraubverbindung 40 zur Befestigung der Anschlussplatte 36 mit dem Zwischenelement 42 und damit der Bodenwand beziehungsweise Bodenplatte 20 des Wohnaufbaus 16 des Anhängers aufweist. Zudem wird aus Fig. 2 deutlich, dass in dem dargestellten Ausführungsbeispiel der Tragarm 32 eine ungefähr quadratische Querschnittsform aufweist und hohl ausgebildet ist. Dabei kann die Querschnittsform des Tragarms 32 geschlossen oder auch offen ausgebildet sein.

Fig.2 zeigt zudem die Anordnung eines Bremszugs 26 sowie einer Radaufhängung 46 des Anhängers. Zudem ist an der Bodenwand 20 eine Achsverkleidung 44 ausgebildet, die ungefähr quer zur Fahrtrichtung des Anhängers verläuft.

Fig. 1 zeigt wiederum den grundsätzlichen Aufbau des Wohnaufbaus 16 des dargestellten Anhängers. Man erkennt die Anordnung einer Seitenwand 18, die über einen gewölbten Übergangsbereich 52 in die Bodenwand beziehungsweise Bodenplatte 20 des Anhängers mündet. Der Übergangsbereich 52 ist auch im Bereich zwischen einer Vorderwand 48 und einer Rückwand 50 des Anhängers und der Bodenwand 20 ausgebildet. Des Weiteren zeigt Fig. 1 die Anordnung einer Radachse 24 zum Antrieb der Anhängerräder 22. Die einzelnen Elemente des dargestellten Wohnwagens können zumindest teilweise in Leichtbauweise hergestellt sein. Zudem kann der Wohnaufbau 16 selbsttragend ausgebildet sein.

Aus Fig. 2 wird zudem deutlich, dass das Zwischenelement 42 plateauartig ausgebildet ist, wobei die Form und Ausdehnung des in Richtung Boden gerichteten Plateaus der Form und Größe der Anschlussplatte 36 entspricht.

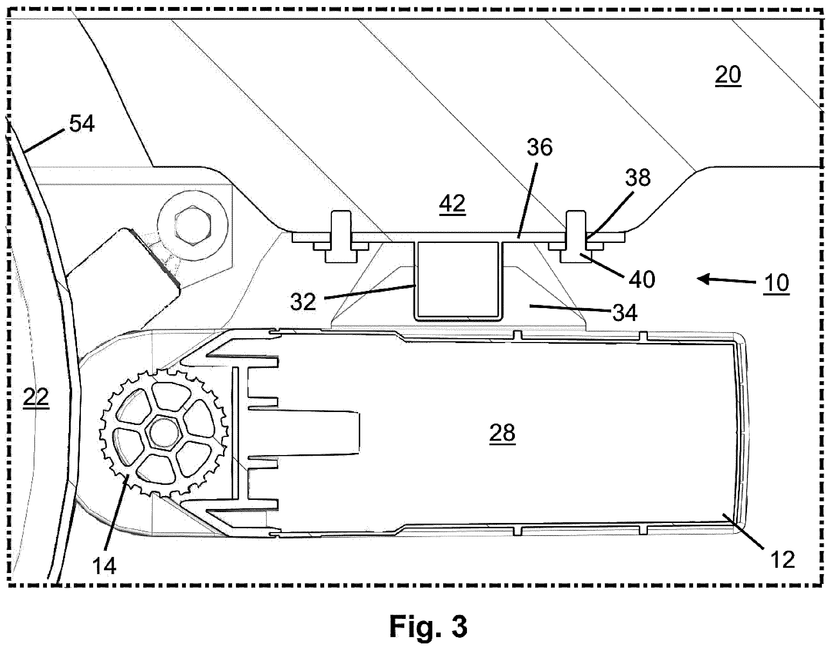

Fig. 3 zeigt eine schematische, teilweise geschnittene Darstellung des Hilfsantriebs 12 gemäß den Figuren 1 und 2. Man erkennt die Anordnung des Antriebselementes 14 in Richtung der Lauffläche 54 des Anhängerrades 22. Des Weiteren wird deutlich, dass das Gehäuse 28 über das Befestigungselement 34 mit dem Tragarm 32 verbunden ist. An dem Tragarm 32 ist wiederum die Anschlussplatte 36 angeschweißt, wobei über die Öffnungen 38 in der Anschlussplatte 36 Schraubverbindungen 40 einführbar sind. Die Schraubverbindungen 40 verbinden die Anschlussplatte 36 und damit den Tragarm 32 mit dem Hilfsantrieb 12 mit dem an der Bodenplatte 20 ausgebildeten Zwischenelement 42. Es wird deutlich, dass in dem dargestellten Ausführungsbeispiel das Zwischenelement 42 einstückig mit der Bodenwand 20 ausgebildet ist. Es handelt sich also um eine Art Verdickung oder Ausbuchtung der Bodenwand 20. Das Zwischenelement 42 kann aber auch als separates Element gefertigt sein und über entsprechende Verbindungsmittel mit der Bodenwand 20 verbunden sein.

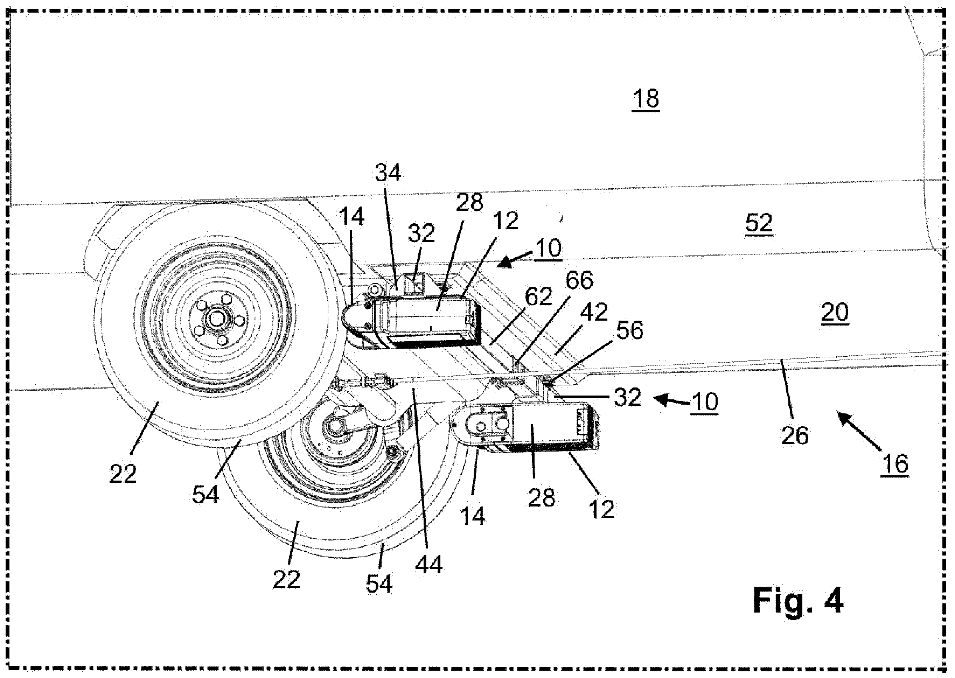

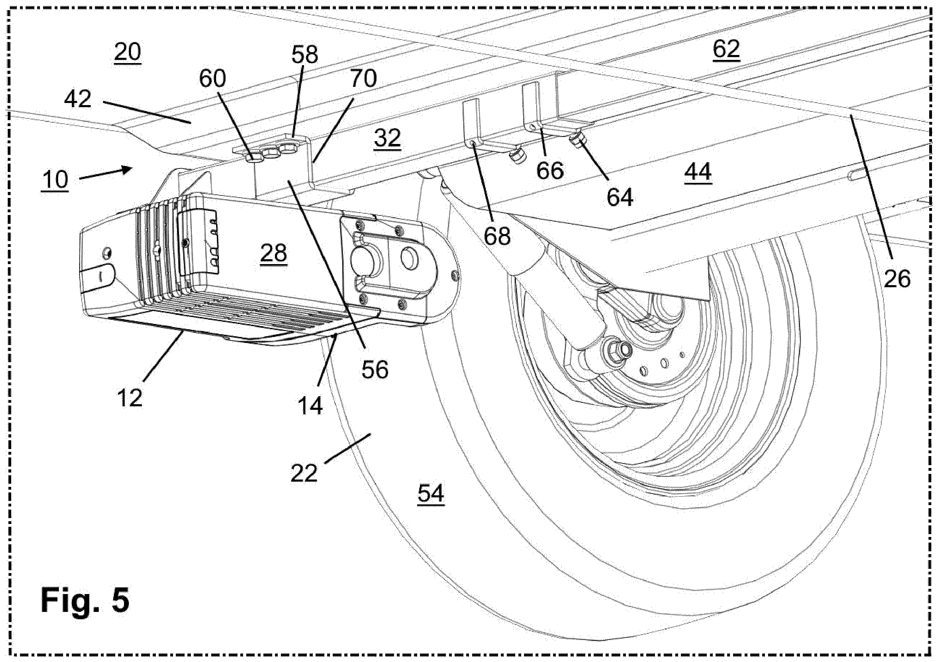

Fig. 4 zeigt eine schematische Darstellung eines Hilfsantriebs 12 gemäß einer zweiten Ausführungsform. In dem dargestellten Ausführungsbeispiel sind zwei Hilfsantriebe 12 gezeigt, die jeweils im Bereich der Anhängerräder 22 angeordnet sind. Jeder Hilfsantriebe 12 weist wiederrum ein walzenförmiges Antriebselement 14 auf, das zum Eingriff mit dem Anhängerrad 22 beziehungsweise dessen Lauffläche bringbar ist. Des Weiteren erkennt man, dass jeder Hilfsantrieb 12 an einem entsprechenden Tragarm 32 über das Befestigungselement 34, welches mit dem Gehäuse 28 des Hilfsantriebs 12 verbunden ist, befestigt ist. Die beiden Tragarme 32 sind über eine Querstrebe 62 miteinander verbunden. In Zusammenschau mit Fig. 5, welche eine schematische Darstellung des Hilfsantriebs 12 gemäß Fig. 4 aus einem anderen Blickwinkel zeigt, wird deutlich, dass die entsprechenden Enden der Querstrebe 62 in eines von dem Anhängerrad 22 abgewandten Ende des Tragarms 32 gesteckt und über Fixierschrauben 64 zueinander lagefixiert sind. Über Gewindebohrungen 68, die einerseits durch Verstärkungselemente 66, die an der Außenseite des Tragarms 32 angeordnet sind, und andererseits durch den Tragarm 32 selbst gerichtet sind, in Kontakt mit der Querstrebe 62 gebracht. Des Weiteren erkennt man, dass die Tragarme 32 über jeweilige Halteelemente 56 an dem Zwischenelement 42 gehalten werden. Das Zwischenelement 42 ist wiederum an der Bodenwand 20 des Wohnaufbaus 16 des Anhängers ausgebildet. In Zusammenschau mit Fig. 4 erkennt man, dass in dem dargestellten Ausführungsbeispiel das Zwischenelement 42 wiederrum als plateauartiger Vorsprung ausgebildet ist, der sich über die gesamte oder über nahezu die gesamte Erstreckung der Bodenwand 20 quer zu den Seitenwänden 18 des Anhängers erstreckt. Die Haltelemente 56 sind dabei im Bereich der jeweiligen gegenüberliegenden Enden des Zwischenelementes 42 an diese fixiert.

Aus Fig. 5 wird zudem deutlich, dass das Halteelement 56 zwei seitlich abstehende Befestigungsflansche 58 zur Befestigung des Halteelementes 56 an dem Zwischenelement 42 aufweist. Über entsprechende Öffnungen beziehungsweise Bohrungen in den Flanschen 58 können wiederum Schraubverbindungen 60 zur Verbindung mit dem Zwischenelement 42 eingebracht werden. Die Befestigungsflansche 58 können aber auch mit dem Zwischenelement 42 und/oder der Seiten- und/oder Bodenwand 18, 20 und/oder dem Übergangsbereich 52 verklebt, geklemmt oder verschweißt werden.

Zudem erkennt man, dass durch die lösbare Verbindung der Querstrebe 62 mit dem jeweiligen Tragarm 32 die Querstrebe 62 insgesamt mit den Tragarmen 32 teleskopierbar ist. Das Halteelement 56 weist zudem einen Aufnahmesitz 70 zur Aufnahme des Tragarms 32 auf. In dem dargestellten Ausführungsbeispiel weist der Aufnahmesitz 70 eine der Querschnittsform des Tragarms 32 angepasste Querschnittsform auf. Damit ist ein sicherer Sitz beziehungsweise Halt des Tragarms 32 in dem Halteelement 56 gewährleistet.

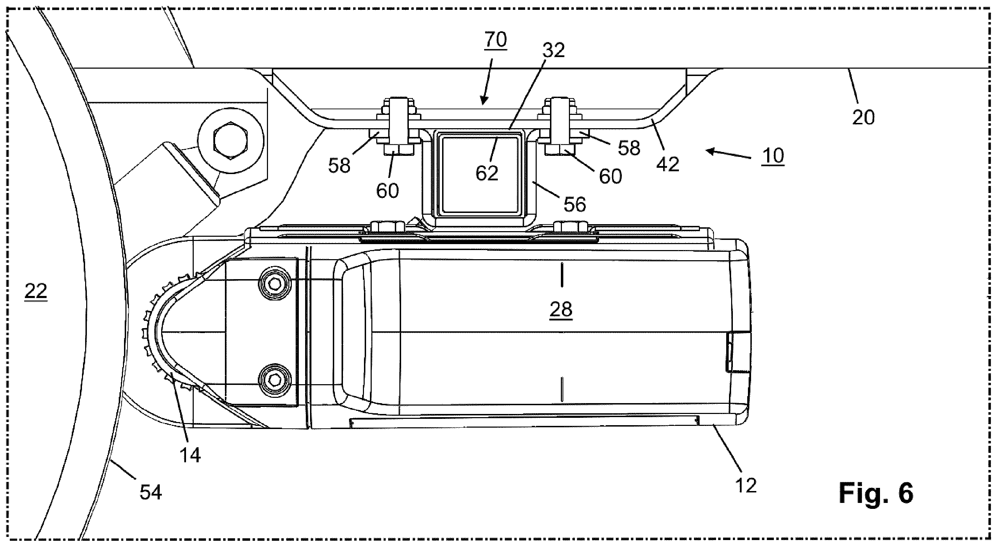

Fig. 6 zeigt eine schematische, teilweise geschnittene Darstellung des Hilfsantriebs 12 gemäß den Figuren 4 und 5. Man erkennt wiederum die Ausgestaltung des Hilfsantriebs 12 mit dem Antriebselement 14, welches in Richtung der Lauffläche 54 des Anhängerrades 22 zeigt. Das Gehäuse 28 des Hilfsantriebs 12 ist wie in den Figuren 4 und 5 beschrieben über das Befestigungselement 34 mit dem Tragarm 32 verbunden. Innerhalb des Tragarms 32 ist die Querstrebe 62 zumindest teilweise geführt. Der Tragarm 32 weist eine ungefähr quadratische geschlossene Querschnittsform auf. Entsprechend ist der Aufnahmesitz 70 des Halteelementes 56 geformt. Man erkennt die Passgenauigkeit zwischen dem Aufnahmesitz 70, dem Tragarm 32 und der innerhalb des Tragarms zumindest teilweise geführten Querstrebe 62. Des Weiteren wird aus Fig. 6 die Befestigung der Befestigungsflansche 58 über die Schraubverbindungen 60 an dem als zumindest teilweises Hohlelement ausgebildeten Zwischenelement 42. Das Zwischenelement 42 ist wiederum an der Bodenwand 20 angeordnet und damit fixiert. Es besteht aber auch die Möglichkeit, dass auch gemäß diesem Ausführungsbeispiel das Zwischenelement 42 einstückig mit der Bodenwand ausgeführt ist.

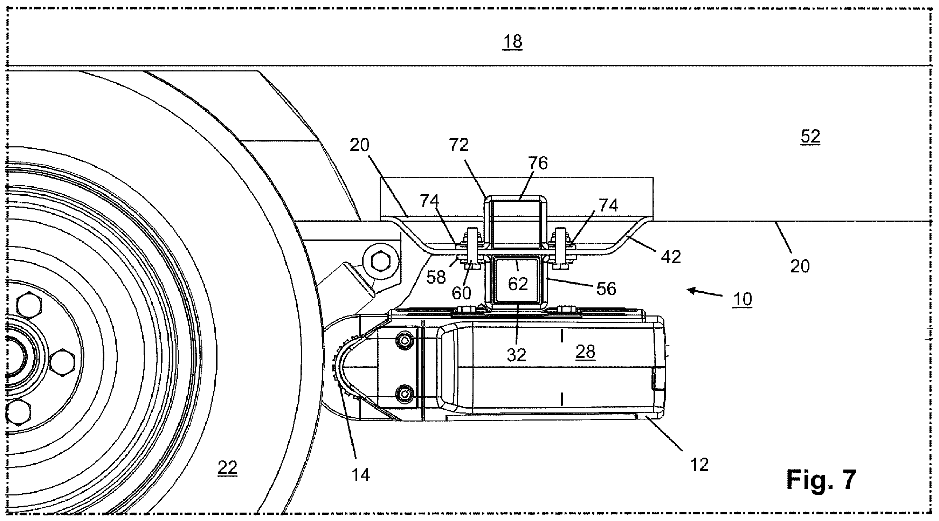

Fig. 7 zeigt eine schematische, teilweise geschnittene Darstellung eines Hilfsantriebs 12 gemäß einer dritten Ausführungsform. Man erkennt, dass die Befestigungs- und Abstützvorrichtung 10 ein zweites Halteelement 72 aufweist, wobei das zweite Halteelement 72 an einer Innenseite des Zwischenelementes 24 und einer Innenseite der Bodenwand 20 angeordnet ist. Des Weiteren wird deutlich, dass die Anordnung des zweiten Halteelementes 72 derart erfolgt, dass es mit dem außenliegenden Halteelement 56 verbindbar ist. In dem dargestellten Ausführungsbeispiel ist das zweite Halteelement als separates Element ausgebildet und weist zwei seitlich quer abstehende Befestigungsflansche 74 auf. Die Befestigungsflansche 74 liegen an der Innenseite des Zwischenelementes 42 an und dienen zur Befestigung des zweiten Halteelementes 72 an dem außenliegenden Halteelement 56. Die Befestigung erfolgt dabei über die Schraubverbindungen 60, die über entsprechende Öffnungen in den Befestigungsflanschen 58, 74 und dem Zwischenelement 42 einbringbar sind.

Des Weiteren erkennt man, dass das zweite Halteelement 72 einen Aufnahmesitz zur Aufnahme einer Verstärkungsstrebe 76 aufweist. Die Verstärkungsstrebe 76 ist in dem dargestellten Ausführungsbeispiel als Vierkantrohr ausgebildet.

Auch in diesem Ausführungsbeispiel weist der Hilfsantrieb 12 ein Antriebselement 14 auf, welches in Richtung der Lauffläche 54 des Anhängerrades zeigt. Das Gehäuse 28 des Hilfsantriebs 12 ist wie in den vorhergehenden Ausführungsbeispielen über ein Befestigungselement 34 (nicht dargestellt) mit dem Tragarm 32 verbunden. Innerhalb des Tragarms 32 ist die Querstrebe 62 zumindest teilweise geführt. Der Tragarm 32 ist in dem Halteelement 56 gehalten.

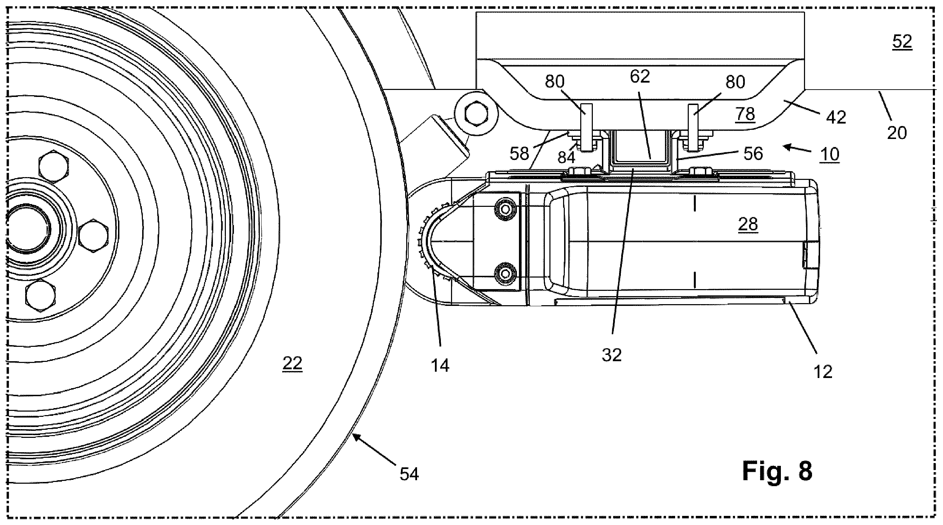

Fig. 8 zeigt eine schematische teilweise geschnittene Darstellung eines Hilfsantriebs 12 gemäß einer vierten Ausführungsform. Man erkennt wiederum die Ausgestaltung des Hilfsantriebs 12 mit dem Antriebselement, welches in Richtung der Lauffläche 54 des Anhängerrads 22 zeigt. Das Gehäuse 28 des Hilfsantriebs 12 ist wie in den vorhergehend beschriebenen Ausführungsbeispielen an dem Tragarm 32 befestigt. Innerhalb des Tragarms 32 ist wiederum die Querstrebe 62 zumindest teilweise geführt. Der Tragarm 32 ist wiederum in dem Halteelement 56 gelagert beziehungsweise gehalten. Im Unterschied zu den im Vorhergehenden beschriebenen Ausführungsbeispielen des Hilfsantriebs 12 weist hier die Befestigungs- und Abstützvorrichtung 10 zwei separat ausgebildete und an dem Zwischenelement 42 des Wohnaufbaus 16 angebrachte Befestigungsbolzen 80 zur Befestigung der Befestigungsflansche 58 des Halteelementes 56 auf. Der Befestigungsbolzen 80 ist in dem dargestellten Ausführungsbeispiel derart ausgebildet, dass er mit dem Befestigungsflansch 58 mittels einer auf dem Bolzen aufschraubbaren Gewindemutter 84 verschraubbar ist. Zudem wird deutlich, dass zumindest ein Ende des Befestigungsbolzens 80 innerhalb einer Wand des Zwischenelementes 42 angeordnet ist. Der Befestigungsbolzen 80 kann dabei mit der Wand 78 des Zwischenelementes 42 mittels einer Schraub- oder Steckverbindung oder mittels Verschweißen oder Verkleben verbunden sein. Es besteht aber auch die Möglichkeit, dass der Befestigungsbolzen 80 einstückig mit der Wand 78 ausgebildet ist.

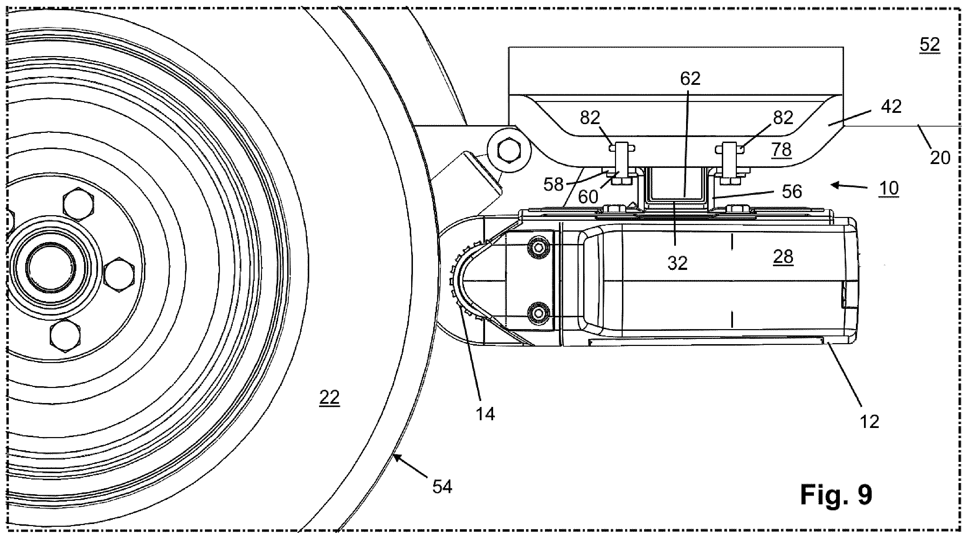

Fig. 9 zeigt eine schematische, teilweise geschnittene Darstellung eines Hilfsantriebs 12 gemäß einer fünften Ausführungsform. Im Unterschied zu den im Vorhergehenden beschriebenen Ausführungsformen des Hilfsantriebs 12 gemäß der vorliegenden Ausführungsform eine Befestigungs- und Abstützvorrichtung 10 auf, die mehrere Gegenlager 82 zur Aufnahme jeweils eines durch eine entsprechende Öffnung des Befestigungsflansches 58 geführten Verbindungselementes 60 umfasst. In dem dargestellten Ausführungsbeispiel ist das Verbindungselement 60 eine Schraubverbindung. Man erkennt, dass das Gegenlager 82 in dem Zwischenelement 42 beziehungsweise der Wand 78 des Zwischenelementes 42 angeordnet ist. Das Gegenlager 82 sowie das Verbindungselement 60 können aber auch derart ausgebildet sein, dass sie miteinander verklemmbar oder steckbar sind. Des Weiteren erkennt man aus Fig. 9, dass in dem dargestellten Ausführungsbeispiel das Gegenlager 82 mit dem Zwischenelement 42 vergossen ist. Bezüglich der weiteren Merkmale des hier dargestellten Hilfsantriebs 12 verweisen wir auf die entsprechenden Merkmale der im Vorhergehenden beschriebenen Ausführungsbeispiele.

Die Befestigungs- und Abstützvorrichtung 10 besteht üblicherweise aus Metall oder Kunststoff oder einer Kombination daraus.

## Patentansprüche

1. Anhänger, insbesondere Wohnwagen, Bootsanhänger, Verkaufswagen, Transportanhänger oder Autotransportanhänger, umfassend einen Wohn- oder Arbeitsaufbau (16) und einen Stützrahmen, wobei der Wohn- oder Arbeitsaufbau (16) auf dem Stützrahmen angeordnet ist sowie mindestens einen Hilfsantrieb für den Anhänger, wobei der Hilfsantrieb (12) mindestens ein Antriebselement (14), welches mit einer Lauffläche (54) eines Anhängerrades (22) in Eingriff bringbar ist und mindestens eine Befestigungs- und Abstützvorrichtung (10) zur Befestigung und Abstützung des Hilfsantriebs (12) an dem Anhänger umfasst, wobei die Befestigungs- und Abstützvorrichtung (10) an einer Seiten- und/oder Bodenwand (18, 20) und/oder einem Übergangsbereich (52) zwischen der Seiten- und Bodenwand (18, 20) und/oder an mindestens einem an der Seiten- und/oder Bodenwand (18, 20) und/oder dem Übergangsbereich (52) angeordneten Zwischenelement (42) des Wohn- oder Arbeitsaufbaus (16) angeordnet ist und die Befestigungs- und Abstützvorrichtung (10) mindestens eine Schraub- und/oder Klemm- und/oder Steckverbindung zur Befestigung eines Tragarms (32) des Hilfsantriebs (12) an der Seiten- und/oder Bodenwand (18, 20) und/oder dem Übergangsbereich (52) und/oder dem Zwischenelement (42) aufweist und an dem Tragarm (32) an einem den entsprechenden Bereichen des Wohn- oder Arbeitsaufbaus zugewandten Ende mindestens eine Anschlußplatte (36) angeordnet ist und die Anschlußplatte (36) mit dem Tragarm (32) verschweißt, verschraubt, verklebt und/oder über eine Klemm- oder Steckverbindung verbunden oder mit diesem einstückig ausgebildet ist.

2. Anhänger nach Anspruch 1, **dadurch gekennzeichnet, dass** ein dem Hilfsantrieb (12) zugewandtes Ende des Tragarms (32) über mindestens ein Befestigungselement (34) mit dem Hilfsantrieb (12), insbesondere einem Gehäuse (28) des Hilfsantriebs (12) verbunden ist.

3. Anhänger nach Anspruch 1 oder 2, **dadurch gekennzeichnet, dass** die Anschlußplatte (36) mindestens eine Öffnung (38) zur Aufnahme einer Schraubverbindung (40) zur Befestigung der Anschlußplatte (36) mit der Seitenund/oder Bodenwand (18, 20) und/oder dem Übergangsbereich (52) und/oder dem Zwischenelement (42) aufweist
und/oder
dass die Anschlußplatte (36) mittels mindestens einer Klemmverbindung mit der Seiten- und/oder Bodenwand (18, 20) und/oder dem Übergangsbereich (52) und/oder dem Zwischenelement (42) verbunden ist
und/oder
dass die Anschlußplatte (36) mittels mindestens einer Steckverbindung mit der Seiten- und/oder Bodenwand (18, 20) und/oder dem Übergangsbereich (52) und/oder dem Zwischenelement (42) verbunden ist.

4. Anhänger nach Anspruch 1 oder 2, **dadurch gekennzeichnet, dass** der Tragarm (32) mittels mindestens einem Halteelement (56) gehalten ist, wobei das Halteelement (56) an der Seiten- und/oder Bodenwand (18, 20) und/oder dem Übergangsbereich (52) und/oder dem Zwischenelement (42) des Wohn- oder Arbeitsaufbaus (16) befestigbar ist oder damit einstückig ausgebildet ist;
oder
dass der Tragarm (32) mittels mindestens einem Halteelement (56) gehalten ist, wobei das Halteelement (56) an der Seiten- und/oder Bodenwand (18, 20) und/oder dem Übergangsbereich (52) und/oder dem Zwischenelement (42) des Wohn- oder Arbeitsaufbaus (16) befestigbar ist oder damit einstückig ausgebildet ist und dass das Halteelement (56) mindestens eine Aufnahmeöffnung oder einen Aufnahmesitz (70) zur Aufnahme und/oder Durchführung des Tragarms (32) aufweist oder dass das Halteelement (56) mindestens eine Aufnahmeöffnung oder einen Aufnahmesitz (70) zur Aufnahme und/oder Durchführung des Tragarms (32) aufweist und eine Querschnittsform der Aufnahmeöffnung oder des Aufnahmesitzes (70) derart gewählt ist, dass sie zumindest teilweise einer Querschnittsform des Tragarms (32) entspricht.

5. Anhänger nach Anspruch 4, **dadurch gekennzeichnet, dass** das Halteelement (56) mindestens ein Fixierelement zur Lagefixierung des Tragarms (32) in dem Halteelement (56) umfasst
und/oder
dass das Halteelement (56) mindestens einen Befestigungsflansch (58) zur Befestigung des Halteelements (56) an der Seiten- und/oder Bodenwand (18, 20) und/oder dem Übergangsbereich (52) und/oder dem Zwischenelement (42) des Wohn- oder Arbeitsaufbaus (16) aufweist
oder
dass das Halteelement (56) mindestens einen Befestigungsflansch (58) zur Befestigung des Halteelements (56) an der Seiten- und/oder Bodenwand (18, 20) und/oder dem Übergangsbereich (52) und/oder dem Zwischenelement (42) des Wohn- oder Arbeitsaufbaus (16) aufweist und der Befestigungsflansch (58) mit der Seiten- und/oder Bodenwand (18, 20) und/oder dem Übergangsbereich (52) und/oder dem Zwischenelement (42) des Wohn- oder Arbeitsaufbaus (16) verschraubbar, verklebbar, klemmbar, steckbar oder verschweißbar ausgebildet ist.

6. Anhänger nach Anspruch 5, **dadurch gekennzeichnet, dass** die Befestigungs- und Abstützvorrichtung (10) mindestens einen separat ausgebildeten, an der Seiten- und/oder Bodenwand (18, 20) und/oder dem Übergangsbereich (52) und/oder dem Zwischenelement (42) des Wohn- oder Arbeitsaufbaus (16) anbringbaren oder einstückig mit der Seiten- und/oder Bodenwand (18, 20) und/oder dem Übergangsbereich (52) und/oder dem Zwischenelement (42) ausgebildeten Befestigungsbolzen (80) zur Befestigung des Befestigungsflanschs (58) umfasst.

7. Anhänger nach Anspruch 5 oder 6, **dadurch gekennzeichnet, dass** die Befestigungs- und Abstützvorrichtung (10) mindestens ein Gegenlager (82) zur Aufnahme eines durch eine entsprechende Öffnung des Befestigungsflansches (58) geführten Verbindungselementes (60) umfasst, wobei das Gegenlager (82) in der Seiten- und/oder Bodenwand (18, 20) und/oder in dem Übergangsbereich (52) und/oder in dem Zwischenelement (42) des Wohn- oder Arbeitsaufbaus (16) angeordnet ist.

8. Anhänger nach Anspruch 7, **dadurch gekennzeichnet, dass** das Verbindungselement (60) derart ausgebildet ist, dass es mit dem Gegenlager (82) verschraubbar, verklemmbar oder steckbar ist und/oder dass das Gegenlager (82) mit der Seiten- und/oder Bodenwand (18, 20) und/oder dem Übergangsbereich (52) und/oder dem Zwischenelement (42) des Wohn- oder Arbeitsaufbaus (16) vergossen ist.

9. Anhänger nach einem der Ansprüche 5 bis 8, **dadurch gekennzeichnet, dass** die Befestigungs- und Abstützvorrichtung (10) ein zweites Haltelement (72) umfasst, wobei das zweite Halteelement (72) an einer Innenseite der Seitenund/oder Bodenwand (18, 20) und/oder einer Innenseite des Übergangsbereichs (52) und/oder einer Innenseite des Zwischenelements (42) des Wohn- oder Arbeitsaufbaus (16) angeordnet ist, derart, dass es mit dem außenliegenden Halteelement (56) verbindbar ist oder
dass die Befestigungs- und Abstützvorrichtung (10) ein zweites Haltelement (72) umfasst, wobei das zweite Halteelement (72) an einer Innenseite der Seitenund/oder Bodenwand (18, 20) und/oder einer Innenseite des Übergangsbereichs (52) und/oder einer Innenseite des Zwischenelements (42) des Wohn- oder Arbeitsaufbaus (16) angeordnet ist, derart, dass es mit dem außenliegenden Halteelement (56) verbindbar ist und das zweite Halteelement (72) als separates Element oder einstückig mit der Innenseite der Seiten- und/oder Bodenwand (18, 20) und/oder dem Übergangsbereich (52) und/oder dem Zwischenelement (42) ausgebildet ist.

10. Anhänger nach Anspruch 9, **dadurch gekennzeichnet, dass** das zweite Halteelement (72) mindestens eine Aufnahmeöffnung oder einen Aufnahmesitz zur Aufnahme und/oder Durchführung einer Verstärkungsstrebe (76) aufweist,
oder
dass das zweite Halteelement (72) mindestens eine Aufnahmeöffnung oder einen Aufnahmesitz zur Aufnahme und/oder Durchführung einer Verstärkungsstrebe (76) aufweist und dass eine Querschnittsform der Aufnahmeöffnung oder des Aufnahmesitzes des zweiten Halteelements (72) derart gewählt ist, dass sie zumindest teilweise einer Querschnittsform der Verstärkungsstrebe (76) entspricht.

11. Anhänger nach Anspruch 10, **dadurch gekennzeichnet, dass** das zweite Halteelement (72) mindestens ein Fixierelement zur Lagefixierung der Verstärkungsstrebe (76) an dem zweiten Halteelement (72) umfasst und/oder dass das zweite Halteelement (72) mindestens einen Befestigungsflansch (74) zur Befestigung des zweiten Halteelements (72) an dem außenliegenden Halteelement (56) aufweist.

12. Anhänger nach einem der Ansprüche 1 bis 11, **dadurch gekennzeichnet, dass** der Tragarm (32) als Querstrebe des Anhängers ausgebildet ist oder mit einer Querstrebe (62) lösbar verbindbar ist.

13. Anhänger nach einem der vorhergehenden Ansprüche, **dadurch gekennzeichnet, dass** das Zwischenelement (42) als separates, an der Seitenund/oder Bodenwand (18, 20) und/oder dem Übergangsbereich (52) des Wohnoder Arbeitsaufbaus (16) anbringbares Element oder einstückig mit der Seitenund/oder Bodenwand (18, 20) und/oder dem Übergangsbereich (52) des Wohnoder Arbeitsaufbaus (16) des Anhängers ausgebildet ist
und/oder
dass das Zwischenelement (42) als plateuartiger oder kastenartiger Vorsprung ausgebildet ist
und/oder
dass das Zwischenelement (42) als eine Achsverkleidung (44) ausgebildet ist
und/oder
dass das Zwischenelement (42) mindestens ein Verstärkungselement aufweist
und/oder
dass das Zwischenelement (42) derart ausgebildet ist, das es sich an der Bodenwand (20) zwischen den Seitenwänden (18) ungefähr parallel zu einer Radachse (24) des Anhängers erstreckt
und/oder
dass das Zwischenelement (42) derart ausgebildet ist, das es sich über die gesamte oder nahezu über die gesamte Erstreckung der Bodenwand (20) quer zu den Seitenwänden (18) des Anhängers erstreckt.

14. Anhänger nach einem der vorhergehenden Ansprüche, **dadurch gekennzeichnet, dass** der Wohn- oder Arbeitsaufbau (16) des Anhängers selbsttragend ausgebildet ist.

15. Anhänger nach Anspruch 1, **dadurch gekennzeichnet, dass** der Stützrahmen mindestens zwei parallel zueinander verlaufende Längsträger umfasst oder dass der Stützrahmen zwei V-förmig zueinander angeordnete Längsträger umfasst.

## Claims

1. A trailer, in particular caravan, boat trailer, sales vehicle, transport trailer or car transport trailer, comprising a living or working superstructure (16) and a support frame, wherein the living or working superstructure (16) is arranged on the support frame, as well as at least one auxiliary drive for the trailer, wherein the auxiliary drive (12) includes at least one drive element (14), which can be engaged with the tread (54) of a trailer wheel (22), and at least one fastening and supporting device (10) for fastening and supporting the auxiliary drive (12) on the trailer, wherein the fastening and supporting device (10) is arranged on a side and/or bottom wall (18, 20) and/or a transition area (52) between the side and bottom wall (18, 20) and/or on at least one intermediate element (42) of the living or working superstructure (16) arranged on the side and/or bottom wall (18, 20) and/or the transition area (52), and the fastening and supporting device (10) comprises at least one screw and/or clamping and/or plug connection for fastening a carrying arm (32) of the auxiliary drive (12) to the side and/or bottom wall (18, 20) and/or the transition area (52) and/or the intermediate element (42), and at least one connection plate (36) is arranged at the carrying arm (32) at an end facing the corresponding areas of the living or working superstructure, and the connection plate (36) is welded, screwed, adhered to the carrying arm (32) and/or connected to it via a clamping or plug connection or formed integrally with it.

2. The trailer according to claim 1, **characterized in that** an end of the carrying arm (32) facing the auxiliary drive (12) is connected to the auxiliary drive (12), in particular a housing (28) of the auxiliary drive (12), via at least one fastening element (34).

3. The trailer according to claim 1 or 2, **characterized in that** the connection plate (36) comprises at least one opening (38) for receiving a screw connection (40) for fastening the connection plate (36) to the side and/or bottom wall (18, 20) and/or the transition area (52) and/or the intermediate element (42),
and/or
that the connection plate (36) is connected to the side and/or bottom wall (18, 20) and/or the transition area (52) and/or the intermediate element (42) by means of at least one clamping connection,
and/or
that the connection plate (36) is connected to the side and/or bottom wall (18, 20) and/or the transition area (52) and/or the intermediate element (42) by means of at least one plug connection.

4. The trailer according to claim 1 or 2, **characterized in that** the carrying arm (32) is retained by means of at least one retaining element (56), wherein the retaining element (56) can be fastened to the side and/or bottom wall (18, 20) and/or the transition area (52) and/or the intermediate element (42) of the living or working superstructure (16) or is integrally formed therewith;
or
that the carrying arm (32) is retained by means of at least one retaining element (56), wherein the retaining element (56) can be fastened to the side and/or bottom wall (18, 20) and/or the transition area (52) and/or the intermediate element (42) of the living or working superstructure (16) or is formed integrally therewith, and that the retaining element (56) comprises at least one receiving opening or receiving seat (70) for receiving and/or passing the carrying arm (32), or that the retaining element (56) comprises at least one receiving opening or receiving seat (70) for receiving and/or passing the carrying arm (32), and a cross-sectional shape of the receiving opening or the receiving seat (70) is selected such that it at least partially corresponds to a cross-sectional shape of the carrying arm (32).

5. The trailer according to claim 4, **characterized in that** the retaining element (56) includes at least one fixing element for positional fixing of the carrying arm (32) in the retaining element (56),
and/or
that the retaining element (56) comprises at least one fastening flange (58) for fastening the retaining element (56) to the side and/or bottom wall (18, 20) and/or the transition area (52) and/or the intermediate element (42) of the living or working superstructure (16),
or
that the retaining element (56) comprises at least one fastening flange (58) for fastening the retaining element (56) to the side and/or bottom wall (18, 20) and/or the transition area (52) and/or the intermediate element (42) of the living or working superstructure (16), and the fastening flange (58) is formed capable of being screwed, adhered, clamped, plugged or welded to the side and/or bottom wall (18, 20) and/or the transition area (52) and/or the intermediate element (42) of the living or working superstructure (16).

6. The trailer according to claim 5, **characterized in that** the fastening and supporting device (10) includes at least one separately formed fastening bolt (80) capable of being attached to the side and/or bottom wall (18, 20) and/or the transition area (52) and/or the intermediate element (42) of the living or working superstructure (16) or formed integrally with the side and/or bottom wall (18, 20) and/or the transition area (52) and/or the intermediate element (42) for fastening the fastening flange (58).

7. The trailer according to claim 5 or 6, **characterized in that** the fastening and supporting device (10) includes at least one counter bearing (82) for receiving a connecting element (60) passed through a corresponding opening of the fastening flange (58), wherein the counter bearing (82) is arranged in the side and/or bottom wall (18, 20) and/or in the transition area (52) and/or in the intermediate element (42) of the living or working superstructure (16).

8. The trailer according to claim 7, **characterized in that** the connecting element (60) is formed such that it can be screwed, clamped or plugged to the counter bearing (82) and/or that the counter bearing (82) is cast with the side and/or bottom wall (18, 20) and/or the transition area (52) and/or the intermediate element (42) of the living or working superstructure (16).

9. The trailer according to any one of claims 5 to 8, **characterized in that** the fastening and supporting device (10) includes a second retaining element (72), wherein the second retaining element (72) is arranged on an inner side of the side and/or bottom wall (18, 20) and/or an inner side of the transition area (52) and/or an inner side of the intermediate element (42) of the living or working superstructure (16) such that it can be connected to the external retaining element (56), or
that the fastening and supporting device (10) includes a second retaining element (72), wherein the second retaining element (72) is arranged on an inner side of the side and/or bottom wall (18, 20) and/or an inner side of the transition area (52) and/or an inner side of the intermediate element (42) of the living or working superstructure (16), such that it can be connected to the external retaining element (56) and the second retaining element (72) is formed as a separate element or integrally with the inner side of the side and/or bottom wall (18, 20) and/or the transition area (52) and/or the intermediate element (42).

10. The trailer according to claim 9, **characterized in that** the second retaining element (72) comprises at least one receiving opening or receiving seat for receiving and/or passing a reinforcing strut (76);
or
that the second retaining element (72) comprises at least one receiving opening or receiving seat for receiving and/or passing a reinforcing strut (76) and that a cross-sectional shape of the receiving opening or the receiving seat of the second retaining element (72) is selected such that it at least partially corresponds to a cross-sectional shape of the reinforcing strut (76).

11. The trailer according to claim 10, **characterized in that** the second retaining element (72) includes at least one fixing element for positional fixing of the reinforcing strut (76) at the second retaining element (72) and/or that the second retaining element (72) comprises at least one fastening flange (74) for fastening the second retaining element (72) to the external retaining element (56).

12. The trailer according to any one of claims 1 to 11, **characterized in that** the carrying arm (32) is formed as a transverse strut of the trailer or can be detachably connected to a transverse strut (62).

13. The trailer according to any one of the preceding claims, **characterized in that** the intermediate element (42) is formed as a separate element capable of being attached to the side and/or bottom wall (18, 20) and/or the transition area (52) of the living or working superstructure (16) or integrally with the side and/or bottom wall (18, 20) and/or the transition area (52) of the living or working superstructure (16) of the trailer,
and/or
that the intermediate element (42) is formed as a plateau-like or box-like projection,
and/or
that the intermediate element (42) is formed as an axle cover (44),
and/or
that the intermediate element (42) comprises at least one reinforcing element,
and/or
that the intermediate element (42) is formed such that it extends on the bottom wall (20) between the sidewalls (18) approximately parallel to a wheel axle (24) of the trailer,
and/or
that the intermediate element (42) is formed such that it extends transversely to the side walls (18) of the trailer over the entire or nearly over the entire extension of the bottom wall (20).

14. The trailer according to any one of the preceding claims, **characterized in that** the living or working superstructure (16) of the trailer is formed selfsupporting.

15. The trailer according to claim 1, **characterized in that** the support frame includes at least two longitudinal beams extending parallel to each other or that the support frame includes two longitudinal beams arranged V-shaped to each other.

## Revendications

1. Remorque, en particulier caravane, remorque à bateaux, véhicule de vente, remorque de transport ou remorque porte-voitures, comprenant une structure d'habitation ou de travail (16) et un châssis de support, la structure d'habitation ou de travail (16) étant agencée sur le châssis de support, ainsi qu'au moins un entraînement auxiliaire pour la remorque, l'entraînement auxiliaire (12) comprenant au moins un élément d'entraînement (14) qui peut mis en prise avec une surface de roulement (54) d'une roue de remorque (22) et au moins un dispositif de fixation et d'appui (10) pour fixer et soutenir l'entraînement auxiliaire (12) sur la remorque, le dispositif de fixation et d'appui (10) étant agencé sur une paroi latérale et/ou de fond (18, 20) et/ou une zone de transition (52) entre la paroi latérale et la paroi de fond (18, 20) et/ou sur au moins un élément intermédiaire (42) de la structure d'habitation ou de travail (16) agencé sur la paroi latérale et/ou de fond (18, 20) et/ou la zone de transition (52), et le dispositif de fixation et d'appui (10) comportant au moins un assemblage par vissage et/ou serrage et/ou emboîtement pour fixer un bras de support (32) de l'entraînement auxiliaire (12) sur la paroi latérale et/ou de fond (18, 20) et/ou la zone de transition (52) et/ou l'élément intermédiaire (42) et au moins une plaque de raccordement (36) étant agencée sur le bras de support (32) à une extrémité dirigée vers les zones correspondantes de la structure d'habitation ou de travail, et la plaque de raccordement (36) étant soudée, vissée, collée au bras de support (32) et/ou assemblée par un assemblage par serrage ou emboîtement, ou formée d'un seul tenant avec celui-ci.

2. Remorque selon la revendication 1, **caractérisée en ce qu'**une extrémité du bras de support (32) dirigée vers l'entraînement auxiliaire (12), est assemblée avec l'entraînement auxiliaire (12) par au moins un élément de fixation (34) , en particulier un boîtier (28) de l'entraînement auxiliaire (12).

3. Remorque selon la revendication 1 ou 2, **caractérisée en ce que** la plaque de raccordement (36) comporte au moins une ouverture (38) pour la réception d'un assemblage par vissage (40) destiné à fixer la plaque de raccordement (36) avec la paroi latérale et/ou de fond (18, 20) et/ou la zone de transition (52) et/ou l'élément intermédiaire (42)
et/ou
**en ce que** la plaque de raccordement (36) est assemblée avec la paroi latérale et/ou de fond (18, 20) et/ou la zone de transition (52) et/ou l'élément intermédiaire (42) au moyen d'au moins un assemblage par serrage
et/ou
**en ce que** la plaque de raccordement (36) est assemblée avec la paroi latérale et/ou de fond (18, 20) et/ou la zone de transition (52) et/ou l'élément intermédiaire (42) au moyen d'au moins un assemblage par emboîtement.

4. Remorque selon la revendication 1 ou 2, **caractérisée en ce que** le bras de support (32) est maintenu au moyen d'au moins un élément de maintien (56), l'élément de maintien (56) pouvant être fixé sur la paroi latérale et/ou de fond (18, 20) et/ou la zone de transition (52) et/ou l'élément intermédiaire (42) de la structure d'habitation ou de travail (16) ou est ainsi formé d'un seul tenant ;
ou
**en ce que** le bras de support (32) est maintenu au moyen d'au moins un élément de maintien (56), l'élément de maintien (56) pouvant être fixé sur la paroi latérale et/ou de fond (18, 20) et/ou la zone de transition (52) et/ou l'élément intermédiaire (42) de la structure d'habitation ou de travail (16) ou est ainsi formé d'un seul tenant, et **en ce que** l'élément de maintien (56) comporte au moins une ouverture de réception ou un siège de réception (70) pour recevoir et/ou faire passer à travers le bras de support (32), ou **en ce que** l'élément de maintien (56) comporte au moins une ouverture de réception ou un siège de réception (70) pour recevoir et/ou faire passer à travers le bras de support (32) et une forme de section transversale de l'ouverture de réception ou du siège de réception (70) est choisie de telle sorte qu'elle correspond au moins partiellement à une forme de section transversale du bras de support (32).

5. Remorque selon la revendication 4, **caractérisée en ce que** l'élément de maintien (56) comprend au moins un élément de fixation afin d'immobiliser le bras de support (32) dans l'élément de maintien (56)
et/ou
**en ce que** l'élément de maintien (56) comporte au moins une bride de fixation (58) pour fixer l'élément de maintien (56) sur la paroi latérale et/ou de fond (18, 20) et/ou la zone de transition (52) et/ou l'élément intermédiaire (42) de la structure d'habitation ou de travail (16)
ou
**en ce que** l'élément de maintien (56) comporte au moins une bride de fixation (58) pour fixer l'élément de maintien (56) sur la paroi latérale et/ou de fond (18, 20) et/ou la zone de transition (52) et/ou l'élément intermédiaire (42) de la structure d'habitation ou de travail (16) et la bride de fixation (58) peut être vissée, collée, serrée, emboîtée ou soudée avec la paroi latérale et/ou de fond (42, 20) et/ou la zone de transition (52) et/ou l'élément intermédiaire (42) de la structure d'habitation ou de travail (16).

6. Remorque selon la revendication 5, **caractérisée en ce que** le dispositif de fixation et d'appui (10) comprend au moins un boulon de fixation (80) réalisé séparément, pouvant être monté sur la paroi latérale et/ou de fond (18, 20) et/ou la zone de transition (52) et/ou l'élément intermédiaire (42) de la structure d'habitation ou de travail (16) ou formé d'un seul tenant avec la paroi latérale et/ou de fond (18, 20) et/ou la zone de transition (52) et/ou l'élément intermédiaire (42) afin de fixer la bride de fixation (58).

7. Remorque selon la revendication 5 ou 6, **caractérisée en ce que** le dispositif de fixation et d'appui (10) comprend au moins une butée (82) pour recevoir un élément d'assemblage (60) guidé à travers une ouverture correspondante de la bride de de fixation (58), la butée (82) étant agencée dans la paroi latérale et/ou de fond (18, 20) et/ou dans la zone de transition (52) et/ou dans l'élément intermédiaire (42) de la structure d'habitation ou de travail (16).

8. Remorque selon la revendication 7, **caractérisée en ce que** l'élément d'assemblage (60) est conçu de telle sorte qu'il peut être vissé, collé ou emboîté avec la butée (82) et/ou **en ce que** la butée (82) est moulée avec la paroi latérale et/ou de fond (18, 20) et/ou la zone de transition (52) et/ou l'élément intermédiaire (42) de la structure d'habitation ou de travail (16).

9. Remorque selon l'une des revendications 5 à 8, **caractérisée en ce que** le dispositif de fixation et d'appui (10) comprend un second élément de maintien (72), le second élément de maintien (72) étant agencé sur un côté intérieur de la paroi latérale et/ou de fond (18, 20) et/ou sur un côté intérieur de la zone de transition (52) et/ou sur un côté intérieur de l'élément intermédiaire (42) de la structure d'habitation ou de travail (16), de telle sorte qu'il peut être assemblé avec l'élément de maintien situé à l'extérieur (56) ou **en ce que** le dispositif de fixation et d'appui (10) comprend un second élément de maintien (72), le second élément de maintien (72) étant agencé sur un côté intérieur de la paroi latérale et/ou de fond (18, 20) et/ou sur un côté intérieur de la zone de transition (52) et/ou sur un côté intérieur de l'élément intermédiaire (42) de la structure d'habitation ou de travail (16), de telle sorte qu'il peut être assemblé avec l'élément de maintien situé à l'extérieur (56) et le second élément de maintien (72) étant réalisé sous la forme d'un élément séparé ou étant formé d'un seul tenant avec le côté intérieur de la paroi latérale et/ou de fond (18, 20) et/ou la zone de transition (52) et/ou l'élément intermédiaire (42).

10. Remorque selon la revendication 9, **caractérisée en ce que** le second élément de maintien (72) comporte au moins une ouverture de réception ou un siège de réception pour recevoir et/ou faire passer à travers une entretoise de renfort (76) ;
ou
**en ce que** le second élément de maintien (72) comporte au moins une ouverture de réception ou un siège de réception pour recevoir et/ou faire passer à travers une entretoise de renfort (76) et **en ce qu'**une forme de section transversale de l'ouverture de réception ou du siège de réception du second élément de maintien (72) est choisie de telle sorte qu'elle correspond au moins partiellement à une forme de section transversale de l'entretoise de renfort (76).

11. Remorque selon la revendication 10, **caractérisée en ce que** le second élément de maintien (72) comprend au moins un élément de fixation afin d'immobiliser l'entretoise de renfort (76) sur le second élément de maintien (72) et/ou **en ce que** le second élément de maintien (72) comporte au moins une bride de fixation (74) afin de fixer le second élément de maintien (72) sur l'élément de maintien situé à l'extérieur (56).

12. Remorque selon l'une des revendications 1 à 11, **caractérisée en ce que** le bras de support (32) est réalisé sous la forme d'une traverse de la remorque ou peut être assemblé avec une traverse (62) de manière détachable.

13. Remorque selon l'une des revendications précédentes, **caractérisée en ce que** l'élément intermédiaire (42) est réalisé sous la forme d'un élément séparé, pouvant être monté sur la paroi latérale et/ou de fond (18, 20) et/ou la zone de transition (52) de la structure d'habitation ou de travail (16), ou formé d'un seul tenant avec la paroi latérale et/ou de fond (18, 20) et/ou la zone de transition (52) de la structure d'habitation ou de travail (16) de la remorque
et/ou
**en ce que** l'élément intermédiaire (42) est réalisé sous la forme d'une saillie analogue à une plaque ou à une boîte
et/ou
**en ce que** l'élément intermédiaire (42) est réalisé sous la forme d'une garniture d'essieu (44)
et/ou
**en ce que** l'élément intermédiaire (42) comporte au moins un élément de renfort
et/ou
**en ce que** l'élément intermédiaire (42) est conçu de telle sorte qu'il s'étend sur la paroi de fond (20) entre les parois latérales (18) de manière sensiblement parallèle à un essieu de roue (24) de la remorque
et/ou
**en ce que** l'élément intermédiaire (42) est conçu de telle sorte qu'il s'étend sur la totalité ou sur pratiquement toute l'étendue de la paroi de fond (20) transversalement aux parois latérales (18) de la remorque.

14. Remorque selon l'une des revendications précédentes, **caractérisée en ce que** la structure d'habitation ou de travail (16) de la remorque est réalisée de manière autoportante.

15. Remorque selon la revendication 1, **caractérisée en ce que** le châssis de support comprend au moins deux longerons s'étendant parallèlement l'un à l'autre ou **en ce que** le châssis de support comprend deux longerons agencés en forme de V l'un par rapport à l'autre.
